# EUROPEAN PATENT APPLICATION

(11) **EP 3 045 652 A1**
(43) Date of publication of application: **20.07.2016**
(21) Application number: 16151492.2
(22) Date of filing: 15.01.2016
(51) Int. Cl.: E06C 7/00, B08B 1/00, B08B 9/023, E02B 17/00

(54) **LADDER CLEANING DEVICE**

(30) Priority: 15.01.2015 GB 201500682
(71) Applicant: Crawford, Mathew, Windermere LA23 3PW (GB)
(72) Inventor: Crawford, Mathew, Windermere LA23 3PW (GB)
(74) Representative: Awapatent A/S

(57) **Abstract**

A ladder cleaning device (11). The ladder cleaning device (11) uses the motion of the sea to move freely up and down along a ladder (14). On a main unit (4) a number of brushes (9) are attached, which clean the ladder constantly whilst the ladder cleaning device (11) is moving up and down.

## Description

This invention relates to a mechanical floating device, more specifically an offshore ladder cleaning device which maintains a clean ladder offshore, using the movement and motion of the sea.

Access to an offshore wind turbine, or other offshore structures, is made by climbing a ladder attached to the transition piece (on the monopile of the Wind Turbine.) The lower part of this ladder is submerged in water half of its life, due to the rise and fall of the tide. Due to the ladder being in and out of the water, there is a large issue with algae, sea weed and other marine growth on the ladder rungs, which in time makes it extremely slippery, causing a big health and safety issue whilst climbing the rungs at a low tide. The current solution to this problem is cleaning the ladders with a high pressure washer at a low tide. This solves the issue in the short term, but not long term, and due to the weather offshore, it is very hard to keep on top of this work on a day to day basis.

To solve this issue, the present invention provides an offshore ladder cleaning device comprising a number of brushes adapted to engage one or more rungs of a ladder, characterized in that the cleaning device is adapted to move up and down with swells, waves, and tides of the sea along said ladder, so that the brushes engage and clean the rungs. By using the swells, waves, and tides of the sea, the cleaning device becomes autonomous and independent on any outer energy sources. The movement and motion of the device in the sea, will ensure that the brushes are constantly cleaning the ladder rungs, making them safe to climb, and therefore preventing any unwanted marine growth in the future.

According to a preferred embodiment, the ladder cleaning device is adapted to engage a pair of supports associated with the ladder so as to guide the ladder cleaning device when it moves up and down the supports. Thereby it is ensured that the lateral position in front of the ladder and the distance is kept during the up and down motion of the ladder cleaning device. Thus, the device will be able to move freely up and down on two guide rails on either side of the ladder or attach to the side rail of the ladder.

According to a further preferred embodiment, the ladder cleaning device comprises a number of freely moving pulley wheels adapted to engage the supports. The use of pulley wheels secure good engagement with the supports, while at the same time keeping friction low, so as to allow the ladder cleaning device to move uninhibited in the vertical direction.

According to an especially preferred embodiment, the pulley wheels are accommodated in a pulley housing, where said pulley housing is attached to the main body of the ladder cleaning device by a single attachment point or a single bearing allowing limited movement of said pulley housing with respect to the main body. This allows the ladder cleaning device to counter-act any awkward movements in the sea even though it is in engagement with the supports serving as guides in the vertical direction.

However, according to another preferred embodiment, the pulley wheels are housed inside the main body of the ladder cleaning device. This creates a stronger ladder cleaning device 11, adapted for harsher environments.

According to a further preferred embodiment, the number of brushes comprises brushes attached to the ladder cleaning device at different angles. This allows the brushes to engage the rungs from different directions during the upward and downward motions of the ladder cleaning device, thereby ensuring good cleaning of the rungs.

For similar reasons, the number of brushes may comprise brushes having different lengths.

According to yet a further preferred embodiment, the number of brushes comprises interchangeable brushes. Thus worn out brushes can be replaced, preferably *in situ,* rather than having to replace the entire ladder cleaning device.

According to yet another embodiment, the buoyancy is provided by a floating attachment attached to the main body. Thus, the buoyancy of the ladder cleaning device may readily be adapted to given circumstances. This however, does not exclude that according to another embodiment buoyancy is provided -at least in part, by the main body. For similar reasons it is also envisages that the ladder cleaning device comprises an interchangeable ballast unit.

The invention is described in more details in the accompanying schematic drawings on which:
Figure 1 shows an offshore ladder with substantial marine growth causing significant danger,
Figure 2 shows a front view of an offshore wind turbine ladder with the floating cleaner according to the invention attached,
Figure 3 shows a front view of an alternative embodiment of the floating cleaner according to the invention attached to a pair of supports,
Figure 4 shows a side view of an offshore wind turbine ladder with the floating cleaner according to the invention attached, and
Figure 5 shows a top view of an offshore wind turbine ladder with the floating cleaner according to the invention attached.

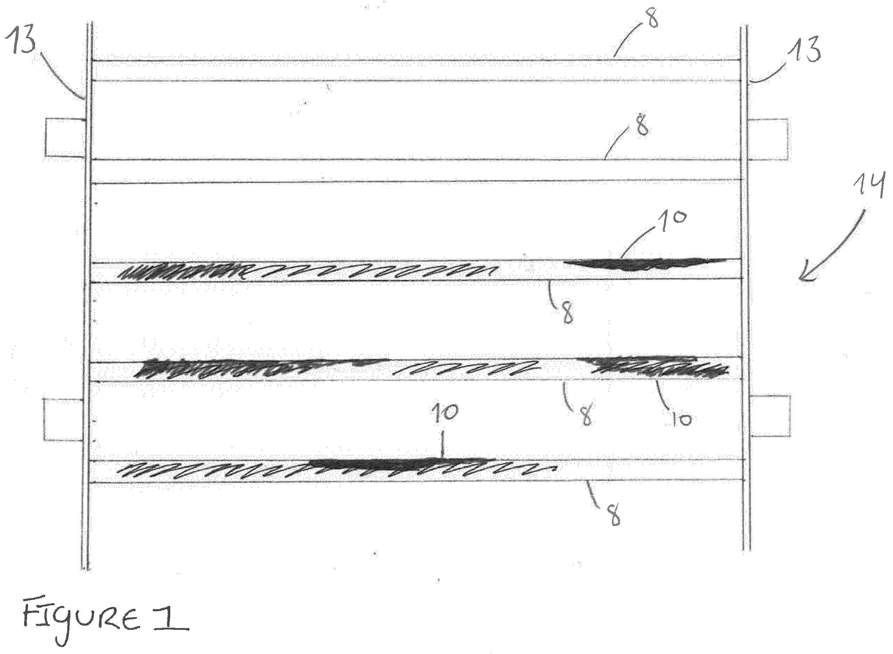

Turning first to Fig. 1, a section of a ladder 14 used in a marine environment is shown. Due to the ladder 14 being in and out of the water depending on tides and waves, there is a large issue with algae and other marine growth 10 on such ladders 14. In the illustrated situation there is marine growth 10 on the lowermost three rungs 8. The marine growth is in particular a problem on the ladder rungs 8, because this, in time, makes them extremely slippery, causing a big health and safety issue whilst climbing the rungs 8 at a low tide.

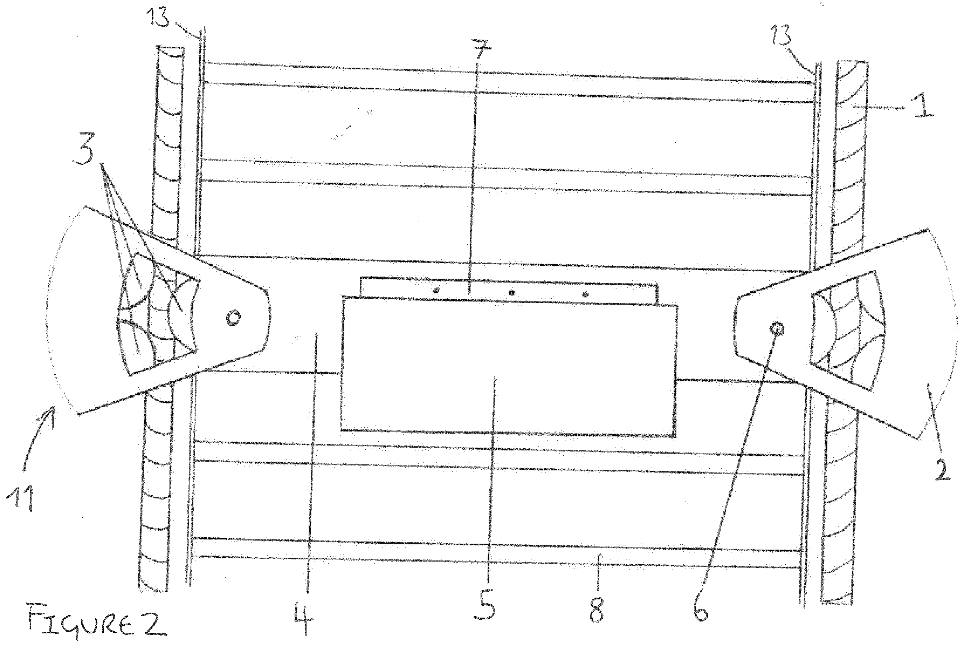

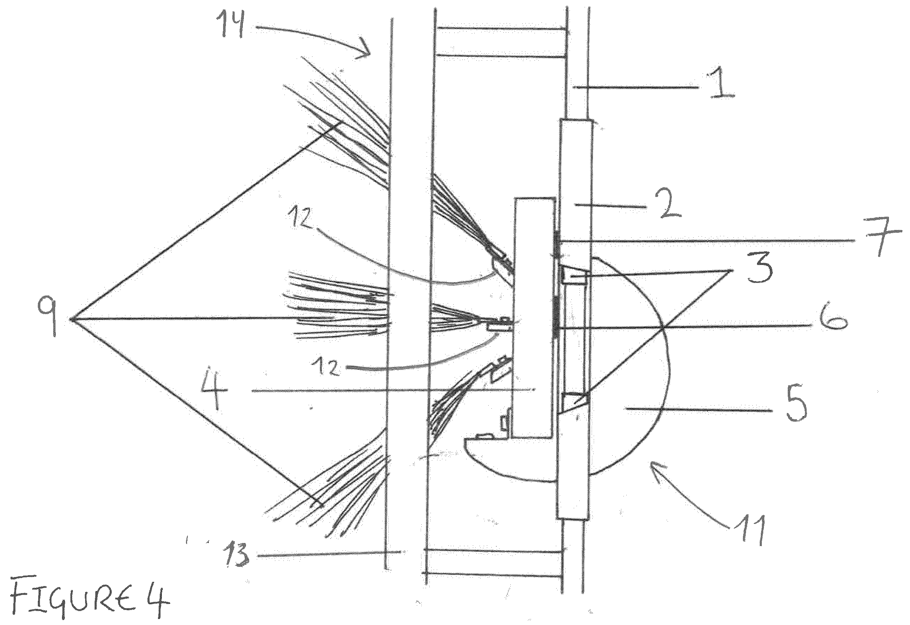

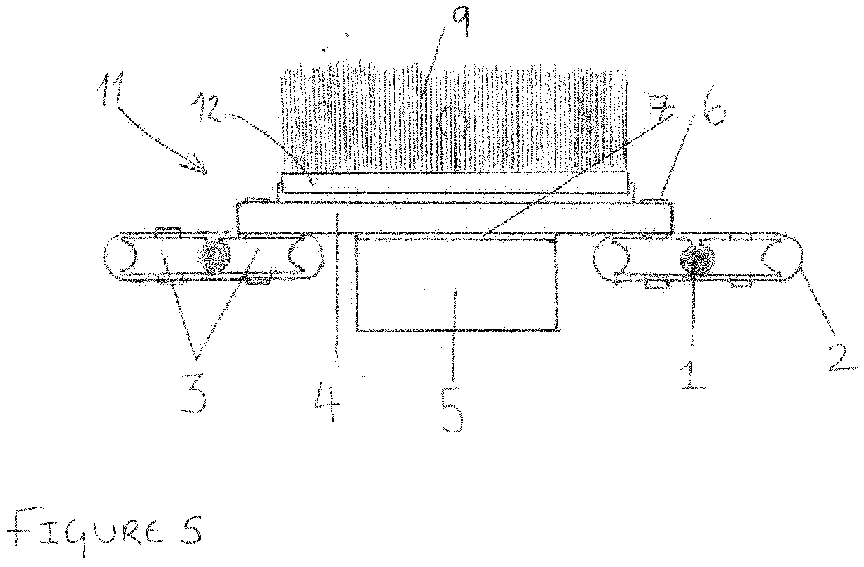

In Figs. 2, 4 and 5 a ladder cleaning device 11 according to the invention for removing such marine growth is shown in front, side and top views, respectively. The ladder cleaning device 11 is essentially an autonomous unit. As can be best be seen from Fig. 4. The ladder cleaning device 11 comprises a main body 4. On the main body 4 a number of brushes 9 for cleaning the rungs of a ladder 14 are mounted. The brushes 9 are attached at different angles so as to maximise their cleaning potential and ensure good cleaning of the rungs 8. The brushes 9 may furthermore have different lengths, e.g. depending on the angle in which they are set. The brushes 9 are preferably interchangeable for easy replacement when, in time, they get worn down or otherwise fail. Accordingly the brushes are attached to brackets 12, adapted to be attached onto the main body 4 of the ladder cleaning device 11.

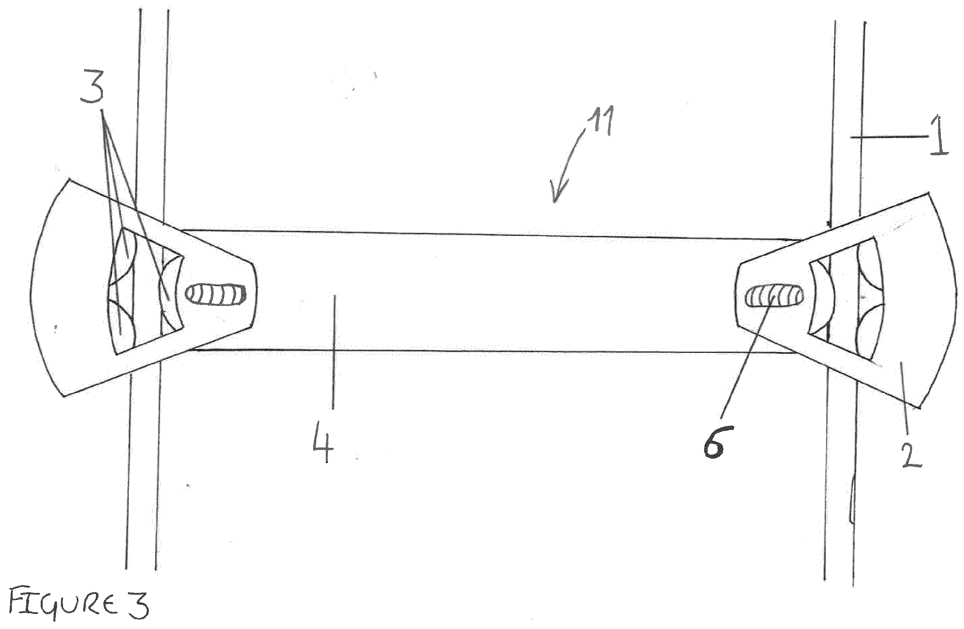

To make the ladder cleaning device 11 autonomous, it has buoyancy allowing it to rise and fall with tides and waves of the water. When the ladder cleaning unit 11 rises and falls, the brushes 9 will sweep the rungs 8 in zone of the ladder 14 where the marine growth is a problem, and remove the undesired marine growth. For this the ladder cleaning device 11 has a floating attachment 5 providing the buoyancy attached to the main body 4 by attachment means 7. The main body 4 may also incorporate some buoyancy itself. On the rear of the ladder cleaning device 11, a ballast unit may be attached, which allows the device to sit semi submerged in the water, or float on top of the water. In an alternative embodiment shown in Fig. 3, both the buoyancy and the ballast are incorporated into the main body 4 of the ladder cleaning device 11. In either case, the ballast weight can also be adjusted depending on the weight of the ladder cleaning device 11 if different versions are available.

The ladder cleaning device 11 is preferably held in position by two supports 1, such as wires, bars or rails which are connected to the ladder frame 13 as shown in Figures 2 to 5. I may of course also be envisaged that the two parts of the ladder frame 13 connected by the rungs 8 may directly serve as supports for the ladder cleaning device 11. The ladder cleaning device 11 is attached to the supports 1 via a number of free moving pulley wheels 3, which are located in two pulley frames 2 at either side of the ladder cleaning device 11, i.e. connected to the respective ends of the main body 4. As can be seen in Figs. 2 to 5 the pulley wheels 3 in each of the two pulley frames 2 engage a respective support 1, and allow the ladder cleaning device 11 to move freely up and down the supports with the motion of the waves and tides. These pulley frames 2 are connected to the device by a bearing 6, as illustrated in Fig. 3 or a single attachment point 6, as illustrated in Fig 2, which allow the pulley frames 2 to move slightly with respect to the main body 4, and counter-act any awkward movements in the sea. Evidently, rather than attaching the pulley frames 2 to the main body 4, the pulley wheels 3 can also be housed in the main body 4 of the device. This creates a stronger ladder cleaning device 11, for much harsher environments.

Figure 3 shows a different version of the invention, which furthermore incorporates a tensioned pulley wheel 3 e.g. spring loaded into engagement with the support 1.

## Claims

1. An offshore ladder cleaning device (11) comprising a number of brushes (9) adapted to engage one or more rungs (8) of a ladder (14), **characterized in that** the cleaning device (11) is adapted to move up and down with swells, waves, and tides of the sea along said ladder (14), so that the brushes (9) engage and clean the rungs (8).

2. An offshore ladder cleaning device (11) according to claim 1, in which the ladder cleaning device (11) is adapted to engage a pair of supports (2) associated with the ladder (14) so as to guide the ladder cleaning device (11) when it moves up and down the supports (1).

3. An offshore ladder cleaning device (11) according to claim 2, in which the ladder cleaning device (11) comprises a number of freely moving pulley wheels (3) adapted to engage the supports (1).

4. An offshore ladder cleaning device (11) according to claim 3, in which the pulley wheels (3) are accommodated in a pulley housing (2), where said pulley housing (2) is attached to the main body (4) of the ladder cleaning device 11 by a single attachment point (6) or a single bearing (6) allowing limited movement of said pulley housing (2) with respect to the main body (4).

5. An offshore ladder cleaning device (11) according to claim 3, in which the pulley wheels (3) are housed inside the main body (4) of the ladder cleaning device (11).

6. An offshore ladder cleaning device (11) according to any one of the preceding claims, in which the number of brushes (9) comprises brushes (9) attached to the ladder cleaning device (11) at different angles.

7. An offshore ladder cleaning device (11) according to any one of the preceding claims, in which the number of brushes (9) comprises brushes (9) having different lengths.

8. An offshore ladder cleaning device (11) according to any one of the preceding claims, in which the number of brushes (9) comprises interchangeable brushes (9).

9. An offshore ladder cleaning device (11) according to any one of the preceding claims, wherein buoyancy is provided by a floating attachment (5) attached to the main body (4).

10. An offshore ladder cleaning device (11) according to any one of the preceding claims, wherein buoyancy is provided by the main body (4).

11. An offshore ladder cleaning device (11) according to any one of claims 9 or 10, in which the ladder cleaning device (11) comprises an interchangeable ballast unit.
